# EUROPEAN PATENT APPLICATION

(11) **EP 4 848 443 A1**
(43) Date of publication of application: **02.12.2026**
(21) Application number: 26180926.3
(22) Date of filing: 26.05.2026
(51) Int. Cl.: H01M 50/293, H01M 10/658

(54) **BATTERY MODULE INCLUDING SPACERS**

(30) Priority: 26.05.2025 KR 20250068465
(71) Applicant: SAMSUNG SDI CO., LTD., Yongin-si, Gyeonggi-do 17084 (KR)
(72) Inventor: LEE, Kangwon, 17084 Yongin-si (KR); WOO, Myungheui, 17084 Yongin-si (KR); YU, Arum, 17084 Yongin-si (KR); LEE, Yeonho, 17084 Yongin-si (KR); YANG, Seungyong, 17084 Yongin-si (KR); YANG, Yunsung, 17084 Yongin-si (KR); JO, Wonjun, 17084 Yongin-si (KR); KIM, Byungsu, 17084 Yongin-si (KR); JEONG, Sunhwan, 17084 Yongin-si (KR)
(74) Representative: Maiwald GmbH

(57) **Abstract**

A battery module includes: a plurality of battery cells, each including a vent; and spacers respectively positioned between neighboring battery cells among the plurality of battery cells, each of the spacers including a thermal insulation portion and a reinforcement portion having an area smaller than that of the thermal insulation portion, and the reinforcement portion is located adjacent to the vent on one side surface of the thermal insulation portion.

## Description

### FIELD

The disclosure relates to a battery module and more particularly to a battery module including spacers.

### BACKGROUND

Unlike primary batteries, which are not rechargeable, secondary batteries are rechargeable and dischargeable, and have advantages of a very low self-discharge rate and a high energy density, and thus have attracted attention. In recent years, secondary batteries have been widely used not only in small devices such as portable electronic devices, but also in medium- and large-sized devices such as electric vehicles (EVs) including plug-in electric vehicles (PEVs) and plug-in hybrid electric vehicles (PHEVs) that are driven by an electrical power source, and in energy storage systems (ESSs).

The operating voltage of a unit secondary battery cell, i.e., a unit battery cell, is typically about 2.5V to 4.5V. Accordingly, when a higher output voltage is required, a module form including a plurality of battery cells is preferred, and the output voltage or output current may be increased depending on the number of battery cells included in the module.

The herein-described information disclosed in the background technology of this disclosure is only intended to improve understanding of the background of the disclosure and therefore may include information that does not constitute prior art.

### SUMMARY

According to aspects of the disclosure, there is provided a battery module including: a plurality of battery cells, each including a vent; and spacers respectively positioned between neighboring battery cells among the plurality of battery cells, wherein each of the spacers includes a thermal insulation portion and a reinforcement portion having an area smaller than that of the thermal insulation portion, and the reinforcement portion is located adjacent to the vent on one side surface of the thermal insulation portion.

According to embodiments of the disclosure, a thickness of each of the spacers in an arrangement direction of the plurality of battery cells may be 1 mm to 5 mm.

According to embodiments of the disclosure, the thermal insulation portion may include a material having elasticity.

According to embodiments of the disclosure, the reinforcement portion may include mica, aerogel, or mesh.

According to embodiments of the disclosure, a ratio of a length of the reinforcement portion to a length of the thermal insulation portion may be 0.3 to 0.7.

According to embodiments of the disclosure, a ratio of a height of the reinforcement portion to a height of the thermal insulation portion may be 0.3 to 0.7.

According to embodiments of the disclosure, the thermal insulation portion may further include a recessed portion in which the reinforcement portion is seated.

According to embodiments of the disclosure, each of the spacers may include an adhesive portion configured to attach the thermal insulation portion and the reinforcement portion to one another.

According to embodiments of the disclosure, each of the spacers may include the reinforcement portion located adjacent to the vent on another side surface of the thermal insulation portion.

According to embodiments of the disclosure, the battery module may further include a pair of end plates facing wider surfaces of the battery cells and located at opposite ends of the plurality of battery cells; a pair of side plates connected to the pair of end plates and each located at each side surface of the plurality of battery cells; and a bottom plate arranged between the pair of side plates.

According to another aspect of the disclosure, there is provided a battery module including: a plurality of battery cells, each including a vent; and spacers respectively positioned between neighboring battery cells among the plurality of battery cells, wherein each of the spacers includes a thermal insulation portion and a reinforcement portion having an area smaller than that of the thermal insulation portion, and a center of the reinforcement portion is located between a center of the thermal insulation portion and the vent.

According to embodiments of the disclosure, a thickness of each of the spacers may be 1 mm to 5 mm.

According to embodiments of the disclosure, the thermal insulation portion may include a material having elasticity.

According to embodiments of the disclosure, the reinforcement portion may include mica, aerogel, or mesh.

According to embodiments of the disclosure, a ratio of a length of the reinforcement portion to a length of the thermal insulation portion may be 0.3 to 0.7.

According to embodiments of the disclosure, a ratio of a height of the reinforcement portion to a height of the thermal insulation portion may be 0.3 to 0.7.

According to embodiments of the disclosure, the thermal insulation portion may further include a recessed portion in which the reinforcement portion is seated.

According to embodiments of the disclosure, each of the spacers may include an adhesive portion configured to attach the thermal insulation portion and the reinforcement portion to one another.

According to embodiments of the disclosure, each of the spacers may include the reinforcement portion located adjacent to the vent on a side surface of the thermal insulation portion.

According to embodiments of the disclosure, the battery module may further include a pair of end plates facing wider surfaces of the battery cells and located at opposite ends of the plurality of battery cells; a pair of side plates connected to the pair of end plates and each located at each side surface of the plurality of battery cells; and a bottom plate arranged between the pair of side plates.

### BRIEF DESCRIPTION OF THE DRAWINGS

The accompanying drawings illustrate embodiments of the disclosure, and together with the detailed description of the disclosure described herein, serve to provide further understanding of the technical aspects of the disclosure, and thus, the disclosure is not construed as being limited to the statements set forth in the drawings:
FIG. 1 is an exploded perspective view schematically illustrating a battery module according to embodiments of the disclosure;
FIG. 2 is a schematic perspective view of a battery cell;
FIG. 3 is a schematic cross-sectional view taken along line I-I' of FIG. 2;
FIG. 4 is a cross-sectional view taken along line II-II' of FIG. 1, according to embodiments;
FIG. 5 is a schematic plan view of a spacer of FIG. 4;
FIG. 6 is a cross-sectional view taken along line II-II' of FIG. 1, according to embodiments;
FIG. 7 is a schematic plan view of a spacer of FIG. 6;
FIG. 8 is a cross-sectional view taken along line II-II' of FIG. 1, according to embodiments;
FIG. 9 is a schematic plan view of a spacer of FIG. 8; and
FIG. 10 is a front view of a spacer of FIG. 1, viewed in an arrangement direction of battery cells.

### DETAILED DESCRIPTION

Hereinafter, preferred embodiments of the disclosure will be described in detail with reference to the attached drawings. Prior to the description, it should be understood that the terms used in the specification and the appended claims should not be construed as being limited to general and dictionary meanings, but interpreted based on the meanings and concepts corresponding to technical aspects of the disclosure on the basis of the principle that the inventor is allowed to define terms appropriately for the best explanation. Therefore, the description proposed herein is merely a preferable example for the purpose of illustrations only, not intended to limit the scope of the disclosure, so it should be understood that other equivalents and modifications could be made thereto without departing from the scope of the disclosure.

It will be further understood that the terms "includes," "comprises," and/or "comprising," "including," when used in this specification, specify the presence of stated features, integers, steps, operations, elements, components and/or groups thereof but do not preclude the presence or addition of one or more other features, integers, steps, operations, elements, components, and/or groups thereof.

Further, the use of "may" when describing embodiments of the disclosure relates to "one or more embodiments of the disclosure."

Additionally, in the accompanying drawings, for purposes of illustration and to facilitate understanding of the disclosure, the dimensions of certain components may be exaggerated and are not necessarily drawn to scale. Additionally, like reference numerals may designate like components in different embodiments.

References to two compared elements as being "the same," may mean that they are "substantially the same." Thus, the phrase "substantially the same" may include deviations that are considered low in the art, for example, deviations of 5% or less. In addition, when a certain parameter is referred to as being uniform in a given region, it may mean that it is uniform in terms of an average.

It will be understood that, although the terms "first," "second," etc. may be used herein to describe various components, these components are not limited by these terms. These terms are only used to distinguish one component from another, and unless otherwise stated, a first component may also be termed a second component.

Throughout the specification, unless otherwise specifically stated, each element may be singular or provided in plural.

When an arbitrary element is referred to as being disposed (or located or positioned) "above" (or "below") or "on" (or "under") a component, it may mean that the arbitrary element is placed in contact with the upper (or lower) surface of the component and may also mean that another component may be positioned between the component and any arbitrary element disposed (or located or positioned) on (or under) the component.

In addition, it will be understood that, when an element is referred to as being "coupled," "linked" or "connected" to another element, the elements may be directly "coupled," "linked" or "connected" to one another, or an intervening element may be present therebetween, through which the element may be "coupled," "linked" or "connected" to another element. Also, when a part is referred to as being "electrically coupled" to another part, the part may be directly connected to another part or an intervening part may be present therebetween such that the part and another part are indirectly connected to one another.

Throughout the specification, the expression "A and/or B" shall be understood to mean A, B, or both A and B, unless otherwise explicitly stated. That is, "and/or" encompasses any and all combinations of the listed elements. The expression "C to D" shall be understood to mean a range from C to D inclusive, unless otherwise specified.

Throughout the specification, a first direction x refers to the arrangement direction of a plurality of battery cells, a second direction y refers to a direction perpendicular to the arrangement direction of the plurality of battery cells, and a third direction z refers to the height of the plurality of battery cells.

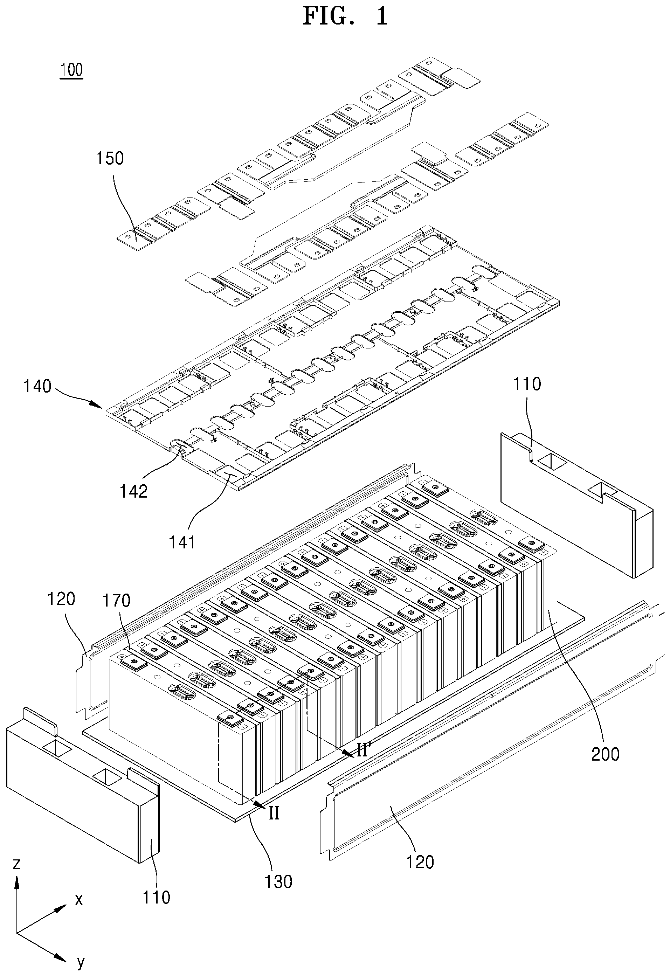

Throughout the specification, the term "length" refers to a dimension formed in a direction (e.g., the Y-axis direction in FIG. 1) perpendicular to the arrangement direction of the battery cells, "thickness" refers to a dimension formed in the arrangement direction (e.g., the X-axis direction in FIG. 1) of the battery cells, and "height" refers to a dimension formed in the height direction (e.g., the Z-axis direction in FIG. 1) of a battery module.

The terminology used herein is for the purpose of describing embodiments of the disclosure only and is not intended to be limiting of the disclosure.

Hereinafter, embodiments of the disclosure will be described in detail with reference to the attached drawings. In the drawings, the same or corresponding components are denoted by the same reference numerals.

An object of the disclosure is to provide a battery module capable of withstanding explosion pressure of a battery cell.

However, the objects of the disclosure are not limited to the object mentioned herein, and other objects that are not mentioned may be clearly understood by those skilled in the art from the following description of the disclosure.

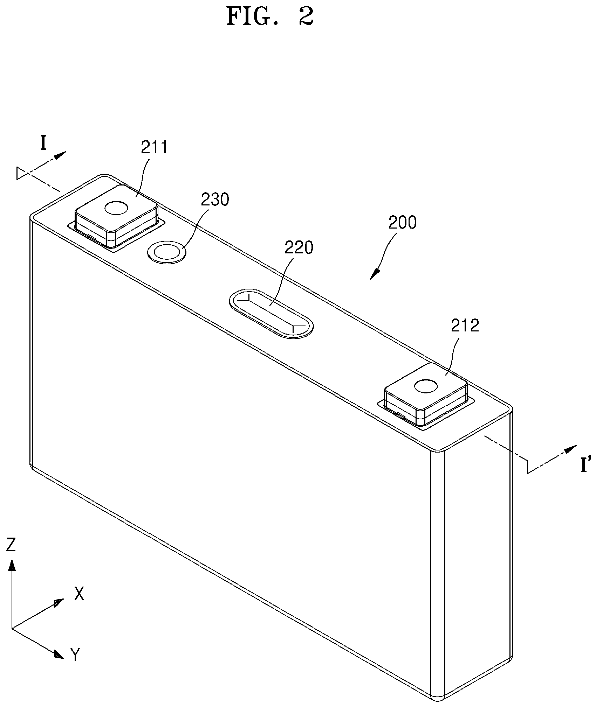

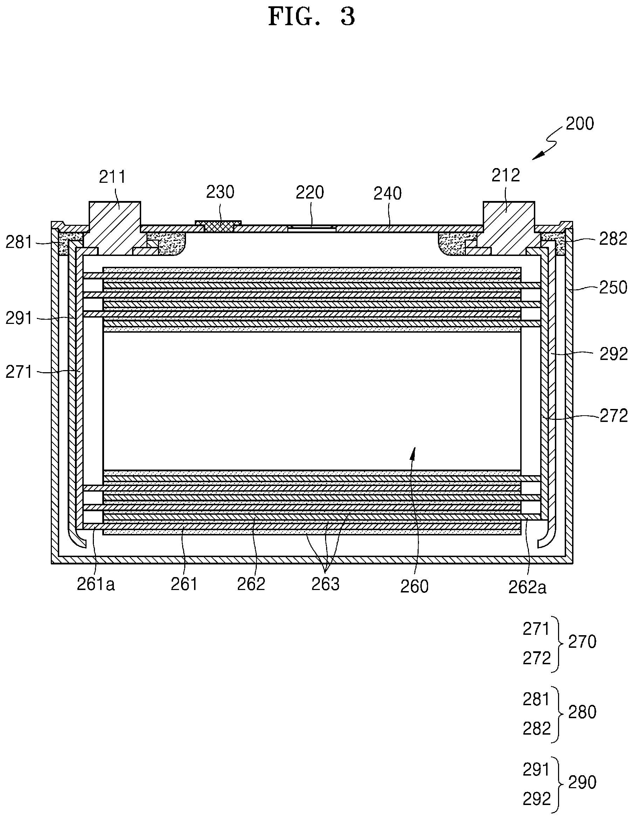

FIG. 1 is an exploded perspective view schematically illustrating a battery module 100 according to embodiments of the disclosure, FIG. 2 is a schematic perspective view of a battery cell 200, and FIG. 3 is a cross-sectional view taken along line I-I' of FIG. 2.

First, referring to FIG. 1, the battery module 100 according to embodiments of the disclosure may include a plurality of battery cells 200 arranged along the first direction x, busbars 150 configured to electrically connect the plurality of battery cells 200, and a busbar holder 140 located on the plurality of battery cells 200 and accommodating the busbars 150.

A plurality of battery cells 200 may be arranged in the battery module 100 and may be electrically connected to one another through the busbar 150. In embodiments, as shown in FIG. 1, the battery cell 200 may be a prismatic cell in the shape of a thin rectangular parallelepiped or flat plate, and a plurality of battery cells 200 may be arranged in a length direction (an X-axis direction in FIG. 1) of the battery module 100. Each of the plurality of battery cells 200 may include one or more electrodes on an upper end thereof, and the plurality of battery cells 200 may be electrically connected to one another through the busbar 150. Each of the plurality of battery cells 200 may include two electrodes having different polarities on an upper surface thereof.

FIG. 1 illustrates prismatic battery cells 200, but the disclosure is not limited thereto. In embodiments, the battery cells 200 may have various shapes such as a cylindrical shape, a can shape, or a pouch shape. The number of battery cells 200 may not be particularly limited and may be appropriately selected according to a desired capacity of the battery module 100.

The busbar holder 140 may be located on the plurality of battery cells 200 and may accommodate the busbars 150. In some embodiments, the busbar holder 140 may include a sensing unit (not shown) configured to perform various protective functions to improve the stability of the battery module 100. For example, the sensing unit may measure voltage, temperature, and the like, and may be electrically connected to a battery management system (BMS). The busbars 150 are arranged on the battery cells 200 and electrically connect the plurality of battery cells 200 to one another. As shown in FIG. 1, the busbar 150 may be installed in an insertion hole 141 of the busbar holder 140 located on the battery cells 200. The busbar 150 may connect the same polarities of the electrodes of the plurality of battery cells 200 to each another. The busbar 150 may include a conductive material such as metal, and a plurality of busbars may be provided, each of which may include a busbar body and a connecting portion. The connecting portion may extend in a direction from the busbar body, and one busbar body may include a plurality of connecting portions. Each connecting portion may come into contact with the electrode exposed through an opening of the busbar holder 140.

Each of the busbars 150 may be provided with a terminal for temperature measurement and/or a terminal for voltage measurement, and the measured information may be transmitted to the sensing unit through lines for integrated management. A circuit board (not shown) prevents the plurality of battery cells 200 from being overcharged or overdischarged, thereby extending the charge/discharge lifespan of the plurality of battery cells 200, and serves to prevent the plurality of battery cells 200 from being short-circuited by a charger or an external terminal 210.

The circuit board may be a base board with a printed circuit pattern formed thereon and may include various electronic devices to control and monitor the charging and discharging operations of the battery cells 200. Accordingly, the circuit board may measure the voltage and the temperature of the battery cells 200 and perform balancing of the battery cells 200 based on the measured values.

The plurality of battery cells 200 may be arranged in a direction (e.g., in the X-axis direction) such that the wider surfaces face one another, and the arranged battery cells 200 may be fixed by a housing. The housing may include a pair of end plates 110 facing the wider surfaces of the battery cells 200 and located at opposite ends of the plurality of battery cells, a pair of side plates 120 connected to the pair of end plates and each located at each side surface of the plurality of battery cells 200, and a bottom plate 130 located between the pair of side plates 120. In embodiments, the bottom plate 130 may be omitted.

When the battery cells 200 expand according to charging and discharging operations of the battery cells 200, the end plates 110 may apply pressure to the battery cells 200 or may absorb pressure caused by the expansion of the battery cells 200, thereby preventing performance degradation of the battery cells 200 and improving the structural stability of the battery module 100. The end plates 110 may include, for example, a metal material to ensure sufficient rigidity of the battery module 100. The pair of end plates 110 may be respectively located outside the wider surfaces of both the outermost battery cells 200. The pair of end plates 110 form, together with the side plates 120 connecting between the pair of end plates 110, the housing, thereby protecting the battery cells 200.

The side plates 120 may each be located on a side of the battery module 100 to protect the plurality of battery cells 200 from an external impact and an external foreign substance and may form a frame of the battery module 100. As shown in FIG. 1, the side plates 120 may be respectively located on opposite side surfaces of the battery module 100 to cover the plurality of battery cells 200.

Opposite ends of the side plate 120 may protrude in the length direction (X-axis direction in FIG. 1), thus being connected to the end plates 110. A protrusion portion of the side plate 120 may be connected to the end plate 110 through laser welding, a bolt, an adhesive, etc.

The pair of end plates 110, the pair of side plates 120, and the bottom plate 130 may be fastened together using members such as bolts, but are not limited thereto, and any fastening method may be used as long as it enables fastening.

Referring to FIGS. 2 and 3, each battery cell 200 may include at least one electrode assembly 260 formed by winding a positive electrode 261, a negative electrode 262, and a separator 263, as an insulator, positioned between the positive electrode 261 and the negative electrode 262, a case 250 in which the electrode assembly 260 is housed, and a cap plate 240 configured to cover an opening of the case 250.

The electrode assembly 260 may be formed in a structure in which a plurality of sheets of the positive electrode 261 and the negative electrodes 262 are alternately stacked with the separator 263 positioned between the positive electrode 261 and the negative electrode 262.

The positive electrode 261 and the negative electrode 262 may each include a coated portion which may be a region coated with an active material on a current collector 270 formed of a thin metal foil, and may respectively include plain portions 261a and 262a which may be regions not coated with an active material.

The case 250 may define the overall exterior of the battery cell 200 and may include a conductive metal such as aluminum, aluminum alloy, or nickel-plated steel. The case 250 may provide a space in which the electrode assembly 260 is accommodated.

The case 250 and the cap plate 240 may each include a conductive material. Here, a first terminal 211 and a second terminal 212, electrically connected respectively to the positive electrode 261 and the negative electrode 262, may be installed to pass through the cap plate 240 and protrude to an outer side.

The outer peripheral surfaces of upper columns of the first terminal 211 and the second terminal 212 that may protrude outward from the cap plate 240 may be threaded and fixed to the cap plate 240 using a nut. However, the disclosure is not limited thereto, and the first terminal 211 and the second terminal 212 may have a rivet structure and be riveted or welded to the cap plate 240.

The cap plate 240 may be a thin plate and may be coupled to the opening of the case 250. The cap plate 240 may include an electrolyte injection port 230 into which a sealing stopper may be installed, and a vent 220 having a notch formed therein.

An electrical insulation member 280 may be installed between the electrode assembly 260 and the cap plate 240. Here, the electrical insulation member 280 may include a first lower insulation member 281 and a second lower insulation member 282, and each of the first and second lower insulation members 281 and 282 may be installed between the electrode assembly 260 and the cap plate 240.

One end of a separation member 290, which may be installed to face one side surface of the electrode assembly 260, may be installed between the electrical insulation member 280 and the first and second terminals 211 and 212.

Here, the separation member 290 may include a first separation member 291 and a second separation member 292.

Accordingly, ends of the first and second separation members 291 and 292, which may be installed to face one side surface of the electrode assembly 260, may be installed between the first and second lower insulation members 281 and 282 and the first and second terminals 211 and 212.

As a result, the first terminal 211 and the second terminal 212, which are coupled by welding to current collectors 270 of the positive electrode 261 and the negative electrode 262, may be coupled to ends of the first and second lower insulation members 281 and 282 and the first and second separation members 291 and 292.

The battery cell 200 will be described, by way of example, as a prismatic lithium-ion battery cell 200. However, the disclosure is not limited thereto, and the disclosure may be applied to various types of battery cells 200, such as a lithium-polymer battery cell 200 or a cylindrical battery cell 200.

Referring to FIGS. 2 and 3, each of the battery cells 200 may include, on one side thereof, the first terminal 211, the second terminal 212, which are electrically connected to one another through the busbar 150, and the vent 220 for discharging gas or the like generated inside the case.

The first terminal 211 may be either a positive terminal or a negative terminal. When the first terminal 211 is a positive terminal, the second terminal 212 may be a negative terminal, and conversely, when the first terminal 211 is a negative terminal, the second terminal 212 may be a positive terminal. That is, the first terminal 211 and the second terminal 212 are formed to have different electrical polarities and are not limited to a specific polarity.

The first terminal 211 of one battery cell 200 may be electrically connected via the busbar 150 to a second terminal 212 of an adjacent battery cell 200, and the second terminal 212 of the same battery cell 200 may be electrically connected via another busbar 150 to a first terminal 211 of another adjacent battery cell 200. The battery cells 200 may be connected in series, but the structure is not limited thereto, and various connection structures may be adopted as needed. In some embodiments, the number and arrangement of battery cells 200 may be varied as needed.

The first terminal 211 and the second terminal 212 may be electrically connected to the current collectors 270 including first and second current collectors 271 and 272 (hereinafter, referred to as positive and negative current collectors, respectively) bonded by welding to the positive plain portion 261a or 262a or the negative plain portion 261a or 262a.

For example, the first terminal 211 and the second terminal 212 may be coupled by welding to the positive and negative current collectors 270. However, the disclosure is not limited thereto, and the first terminal 211 and the second terminal 212 and the positive and negative current collectors 270 may be formed by being integrally coupled to one another.

Each of the plurality of battery cells 200 may include the vent 220 at the upper portion thereof, serving as a gas discharge passage, and the busbar holder 140 may further include vent holes 142 that overlap the vents 220. The vent holes 142 may serve as discharge passages for high-temperature gas released through the vents 220 when the temperature of the battery cells 200 increases.

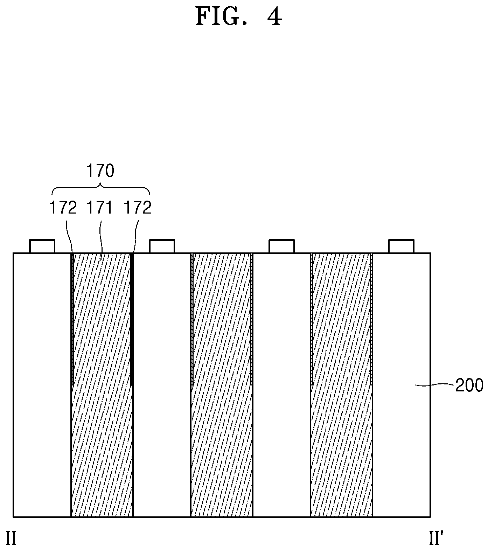

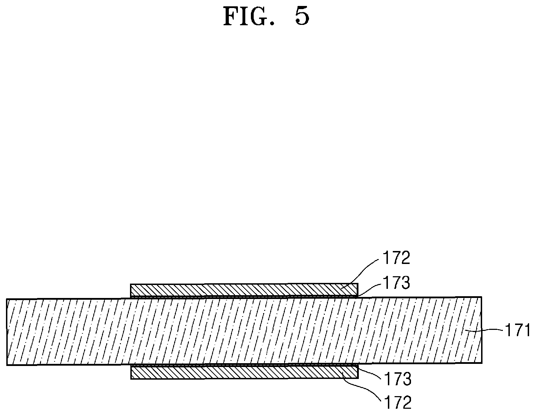

FIG. 4 is a cross-sectional view taken along line II-II' of FIG. 1, according to embodiments. FIG. 5 is a schematic plan view of a spacer 170 of FIG. 4.

Referring to FIGS. 4 and 5, the battery module 100 may include spacers 170 respectively positioned between neighboring battery cells 200 among a plurality of battery cells 200. That is, the plurality of battery cells 200 and the plurality of spacers 170 may be alternately arranged. The spacers 170 may prevent the battery cells 200 from contacting one another between neighboring battery cells 200, thereby maintaining electrical isolation and preventing current from flowing between the battery cells 200 when a defect occurs in any of the battery cells 200. For example, the case 250 may have electrical polarity, and electrical interference between neighboring battery cells 200 may be blocked by interposing the spacer 170 formed of an electrical insulation material. In addition, adjacent battery cells 200 may be prevented from directly colliding with or pressing against one another, thereby preventing damage or deformation.

The spacer 170 has a thin flat plate shape. For example, the spacer 170 may have a width corresponding to the battery cell 200, and a height equal to or smaller than that of the battery cell 200. A thickness of the spacer 170 in an arrangement direction of the plurality of battery cells 200 may be 1 mm to 5 mm. The thickness of the spacer 170 may be a sum of the thicknesses of a thermal insulation portion 171, a reinforcement portion 172, and an adhesive portion 173.

Each of the spacers 170 may include the thermal insulation portion 171 configured to prevent heat from propagating to a neighboring battery cell 200 when a fire occurs in a battery cell 200. When the spacer 170 includes the thermal insulation portion 171, even if thermal runaway occurs in one battery cell 200, transfer of heat to an adjacent battery cell 200 may be prevented. Accordingly, even if one battery cell 200 ignites, it is possible to prevent a problem in which the entire battery module 100 ignites due to heat and flames spreading to adjacent battery cells 200.

The thermal insulation portion 171 may be made of a material having excellent thermal insulation properties. For example, the thermal insulation portion 171 may include mica or aerogel. The thermal insulation portion 171 may be configured in a form in which a fine pore structure is formed in a nanoscale composite structure connected by a SiO₂ structure, and air may be accommodated within the pore structure. This air layer is maintained without flow within the pores of the SiO₂ composite, allowing air, which exhibits excellent thermal insulation characteristics, to be used as a thermal insulation material. Alternatively, the thermal insulation portion 171 may be made of a flame-retardant material. For example, the thermal insulation portion 171 may be ceramic paper of a refractory insulation material including fibers. Alternatively, the thermal insulation portion 171 may be bio-soluble fiber ceramic paper (e.g., ceramic fiber) containing an alkali alkaline earth metal, and may be an eco-friendly high-temperature refractory insulation material harmless to the human body.

In addition, the thermal insulation portion 171 may include a material having elasticity. The thermal insulation portion 171 may effectively absorb pressure acting along the arrangement direction (e.g., the x-direction) of the battery cells 200 when swelling occurs in the battery cells 200. For example, the thermal insulation portion 171 may include a metal material having an appropriate elastic modulus in consideration of the degree of swelling of the battery cell 200 or the magnitude of elastic force applied to the battery cell 200. For example, the thermal insulation portion 171 may include an aluminum material that is lightweight and has an appropriate elastic modulus. As described herein, the thermal insulation portion 171 may provide a heat dissipation or thermal insulation structure, and, by being formed of a metal material having excellent thermal conductivity characteristics, the heat dissipation performance of the thermal insulation portion 171 may be further improved. However, the material of the thermal insulation portion 171 is not limited to the herein materials.

Alternatively, the spacer 170 may include a material such as sponge, urethane, silicone, or rubber.

Each of the spacers 170 may include the reinforcement portion 172 located adjacent to the vent 220 on one side surface of the thermal insulation portion 171. That is, the center of the reinforcement portion 172 may be located between the center of the thermal insulation portion 171 and the vent 220. When a battery cell 200 explodes, explosion pressure is exerted on neighboring battery cells 200, centered around the vent 220, and the reinforcement portion 172 may mitigate the impact on the neighboring battery cells 200 by withstanding the explosion pressure acting along the arrangement direction of the battery cells 200 (e.g., the x-direction). The reinforcement portion 172 may include mica, aerogel, or mesh, but the material of the reinforcement portion 172 is not limited thereto as long as it is a material capable of mitigating an impact on the battery cells 200.

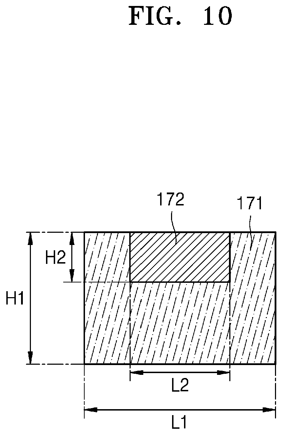

FIG. 10 is a front view of the spacer 170 of FIG. 1, viewed in the arrangement direction of the battery cells.

Referring to FIG. 10, the reinforcement portion 172 may have an area smaller than that of the thermal insulation portion 171. Specifically, a ratio of a length L2 of the reinforcement portion 172 to a length L1 of the thermal insulation portion 171 may be 0.3 to 0.7. A ratio of a height H2 of the reinforcement portion 172 to a height H1 of the thermal insulation portion 171 may be 0.3 to 0.7. Specifically, a lower limit of the ratios of the length L2 and height H2 of the reinforcement portion 172 to the length L1 and height H1 of the thermal insulation portion 171 may be 0.3, 0.35 or 0.4. An upper limit of the ratios of the length L2 and height H2 of the reinforcement portion 172 to the length L1 and height H1 of the thermal insulation portion 171 may be 0.7, 0.65, 0.6, 0.55 or 0.5. When the ratios of the length L2 and height H2 of the reinforcement portion 172 to the length L1 and height H1 of the thermal insulation portion 171 are less than the above range, there is a limit in withstanding the explosion pressure of the battery cell 200. When the ratios exceed the above range, flexibility of the spacer 170 including the thermal insulation portion 171 and the reinforcement portion 172 is reduced, which not only makes it difficult to effectively absorb internal pressure caused by swelling of the battery cell 200, but also may increase the weight of the spacer 170, thereby making it difficult to provide high energy density.

Referring again to FIGS. 4 and 5, the spacer 170 may further include the adhesive portion 173 configured to attach the thermal insulation portion 171 and the reinforcement portion 172 to one another. The adhesive portion 173 may be formed in the same shape as the reinforcement portion 172, but is not limited thereto as long as it is a shape for attaching the thermal insulation portion 171 and the reinforcement portion 172 to one another.

The adhesive portion 173 may be formed using any one of various adhesives having adhesive components, such as a general double-sided tape or an adhesive; however, the components of the adhesive portion 173 in the disclosure are not limited thereto.

In some embodiments, the spacer 170 may further include a reinforcement portion 172 located adjacent to the vent 220 on the other side surface of the thermal insulation portion 171. That is, the spacer 170 may include reinforcement portions 172 located adjacent to the vent 220 on opposite side surfaces of the thermal insulation portion 171. In this case, the spacer 170 may further mitigate an impact on neighboring battery cells 200 by withstanding the explosion pressure of the battery cells 200 arranged on opposite side surfaces of the thermal insulation portion 171 between the neighboring battery cells 200.

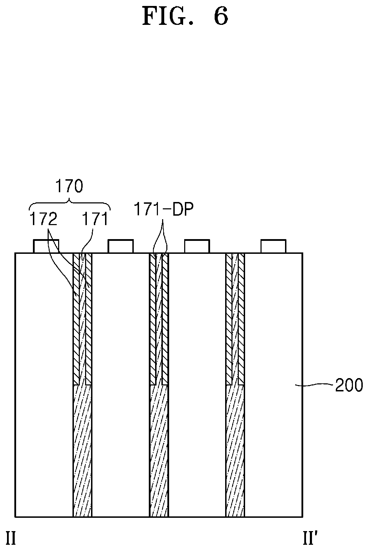

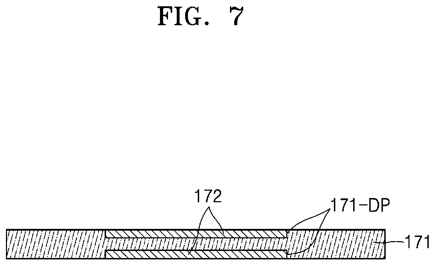

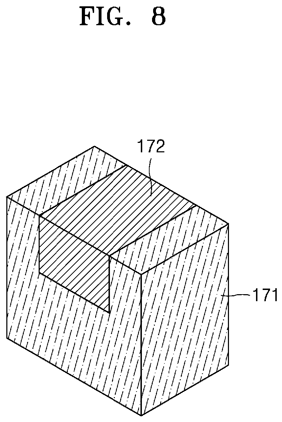

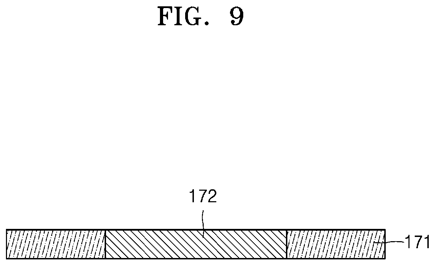

FIG. 6 is a cross-sectional view taken along line II-II' of FIG. 1, according to embodiments. FIG. 7 is a schematic plan view of the spacer 170 of FIG. 6. FIG. 8 is a cross-sectional view taken along line II-II' of FIG. 1, according to embodiments. FIG. 9 is a schematic plan view of the spacer 170 of FIG. 8.

Referring to FIGS. 6 to 9, the thermal insulation portion 171 may further include a recessed portion 171-DP in which the reinforcement portion 172 is seated. The recessed portion 171-DP provides a space in which the reinforcement portion 172 may be fastened to the thermal insulation portion 171, such that the reinforcement portion 172 may be coupled to the thermal insulation portion 171 without the adhesive portion 173. When the reinforcement portions 172 are located adjacent to the vent 220 on opposite side surfaces of the thermal insulation portion 171, the reinforcement portions 172 may both come into contact with neighboring battery cells 200 as shown in FIGS. 6 and 7. In this case, recessed portions 171-DP may be formed in the thermal insulation portion 171 at positions corresponding to the reinforcement portions 172. In this case, high energy density may be achieved. Alternatively, in embodiments, the reinforcement portion 172 may have a thickness equal to the thickness of the thermal insulation portion 171 (e.g., in the X-axis direction in FIG. 1), in which case the reinforcement portion 172 may contact neighboring battery cells 200 on opposite side surfaces of the reinforcement portion 172.

The battery module according to the disclosure can improve stability of the battery module by including a spacer capable of withstanding explosion pressure of a battery cell.

However, the effects obtainable through the disclosure are not limited to the aforementioned effects, and other technical effects not mentioned will be clearly understood by those skilled in the art from the description set forth herein.

While the disclosure has been hereinabove described with regard to a limited number of embodiments and drawings, the present disclosure is not limited thereto, and it is obvious to those skilled in the art that a variety of modifications and changes may be made thereto within the technical aspects of the disclosure and the equivalent scope of the appended claims.

## Claims

1. A battery module (100) comprising:
a plurality of battery cells (200), each including a vent (220); and
spacers (170) respectively positioned between neighboring battery cells (200) among the plurality of battery cells (200),
wherein:
each of the spacers (170) includes a thermal insulation portion (171) and a reinforcement portion (172) having an area smaller than that of the thermal insulation portion (171), and
the reinforcement portion (172) is located adjacent to the vent (220) on one side surface of the thermal insulation portion (171).

2. The battery module (100) of claim 1,
wherein a thickness of each of the spacers (170) in an arrangement direction of the plurality of battery cells (200) is 1 mm to 5 mm.

3. The battery module (100) of claim 1 or 2,
wherein the thermal insulation portion (171) includes a material having elasticity.

4. The battery module (100) of any one of the preceding claims,
wherein the reinforcement portion (172) includes mica, aerogel, or mesh.

5. The battery module (100) of any one of the preceding claims,
wherein a ratio of a length of the reinforcement portion (172) to a length of the thermal insulation portion (171) is 0.3 to 0.7.

6. The battery module (100) of any one of the preceding claims,
wherein a ratio of a height of the reinforcement portion (172) to a height of the thermal insulation portion (171) is 0.3 to 0.7.

7. The battery module (100) of any one of the preceding claims,
wherein the thermal insulation portion (171) further includes a recessed portion (171-DP) in which the reinforcement portion (172) is seated.

8. The battery module (100) of any one of the preceding claims,
wherein each of the spacers (170) further includes an adhesive portion (173) configured to attach the thermal insulation portion (171) and the reinforcement portion (172) to one another.

9. The battery module (100) of any one of the preceding claims,
wherein each of the spacers (170) further includes a reinforcement portion (172) located adjacent to the vent (220) on another side surface of the thermal insulation portion (171).

10. The battery module (100) of any one of the preceding claims, further
comprising:
a pair of end plates facing wider surfaces of the battery cells (200) and located at opposite ends of the plurality of battery cells (200);
a pair of side plates connected to the pair of end plates and each located on each side surface of the plurality of battery cells (200); and
a bottom plate (130) arranged between the pair of side plates.

11. A battery module (100) comprising:
a plurality of battery cells (200), each including a vent (220); and
spacers (170) respectively positioned between neighboring battery cells (200) among the plurality of battery cells (200),
wherein:
each of the spacers (170) includes a thermal insulation portion (171) and a reinforcement portion (172) having an area smaller than that of the thermal insulation portion (171), and
a center of the reinforcement portion (172) is located between a center of the thermal insulation portion (171) and the vent (220).

12. The battery module (100) of claim 11,
wherein a thickness of each of the spacers (170) is 1 mm to 5 mm.

13. The battery module (100) of claim 11 or 12,
wherein a ratio of a length of the reinforcement portion (172) to a length of the thermal insulation portion (171) is 0.3 to 0.7 and
wherein a ratio of a height of the reinforcement portion (172) to a height of the thermal insulation portion (171) is 0.3 to 0.7.

14. The battery module (100) of any one of the claims 11 to 13,
wherein the thermal insulation portion (171) further includes a recessed portion (171-DP) in which the reinforcement portion (172) is seated.

15. The battery module (100) of any one of the claims 11 to 14,
wherein each of the spacers (170) further includes an adhesive portion (173) configured to attach the thermal insulation portion (171) and the reinforcement portion (172) to one another and
wherein each of the spacers (170) further includes a reinforcement portion (172) located adjacent to the vent (220) on a side surface of the thermal insulation portion (171).
